# EUROPEAN PATENT SPECIFICATION

(11) **EP 4 409 517 B1**
(45) Date of publication and mention of the grant of the patent: **06.08.2025**
(21) Application number: 22798179.2
(22) Date of filing: 30.09.2022
(51) Int. Cl.: G06T 7/00, F16L 1/16

(54) **CAPTURING DATA RELATING TO WELDED PIPELINES**
ERFASSUNG VON DATEN IN BEZUG AUF GESCHWEISSTE ROHRLEITUNGEN
CAPTURE DE DONNÉES RELATIVES À DES PIPELINES SOUDÉS

(30) Priority: 30.09.2021 GB 202114060
(43) Date of publication of application: 07.08.2024
(73) Proprietor: Subsea 7 Limited, Sutton, Surrey SM2 5BN (GB)
(72) Inventor: BANKS, Philip Geoffrey, Upminster Essex RM14 2HD (GB); LANDON, Anton Alan, Nantwich Cheshire CW5 8LU (GB)
(74) Representative: Keltie LLP
(86) International application number: PCT/GB2022/052490
(87) International publication number: WO 2023/052790

(56) References cited:
- US-A1- 2020 292 102
- TAAMS V J: "The onset of pipeline twist during reel-lay operations", MSC THESIS, 28 July 2016 (2016-07-28), Delft, NL, XP055929927, Retrieved from the Internet <URL:http://resolver.tudelft.nl/uuid:9edd02a2-956f-414d-83c8-dae8b928f585> [retrieved on 20220610]
- BO LI ET AL: "The Digital Twin of Oil and Gas Pipeline System", IFAC-PAPERSONLINE, vol. 53, no. 5, 2020, DE, pages 710 - 714, XP055930021, ISSN: 2405-8963, DOI: 10.1016/j.ifacol.2021.04.162

## Description

This invention concerns the manufacture and installation of welded pipelines, in particular subsea pipelines for conveying hydrocarbons and other fluids from a subsea source to a surface installation or, reciprocally, from the surface to the seabed. In this respect, references to pipelines herein include various pipes and conduits such as risers and jumper or spool pipes that interconnect items of subsea infrastructure.

The invention is defined by the appended claims and particularly involves capturing data relating to pipe welds as a pipeline experiences deflection and rotation about its longitudinal axis over time, especially during the period from fabrication through to installation subsea.

The context of the invention is the use of digital twins to model the behaviour of subsea installations. A digital twin is a virtual representation of a physical system to provide decision support over the lifecycle of that system. In subsea applications, operating companies build and use digital twins of pipelines and other assets for various purposes, for example to monitor locations that are vulnerable to stress and fatigue.

Digital twins may, for instance, make it possible to test the response of a pipeline to subsea stimuli such as vessel motion, wave loading, ocean currents and thermal cycling. Analysis of data provided by the digital twin allows integrity engineers to predict how the pipeline will respond in the future and so helps to improve operations and to reduce downtime, maintenance costs and operational risks. The digital twin particularly allows for better judgement of fatigue life and hence operational life having regard to stresses experienced by the pipeline during installation and in use.

An important factor in the fatigue life of a steel pipeline is the quality of girth or butt welds formed between successive pipe sections as the pipeline is fabricated onshore or offshore. Effective modelling should take account not only of the presence of defects or flaws in such welds but also their changing circumferential position as the pipeline experiences deformation and rotation after fabrication.

Whilst nominally rigid, a steel pipeline is bent along its length during installation and in use. A pipeline may also be bent along its length during storage and transportation before installation. A pipeline also experiences ovalisation or out-of-roundness in cross-section.

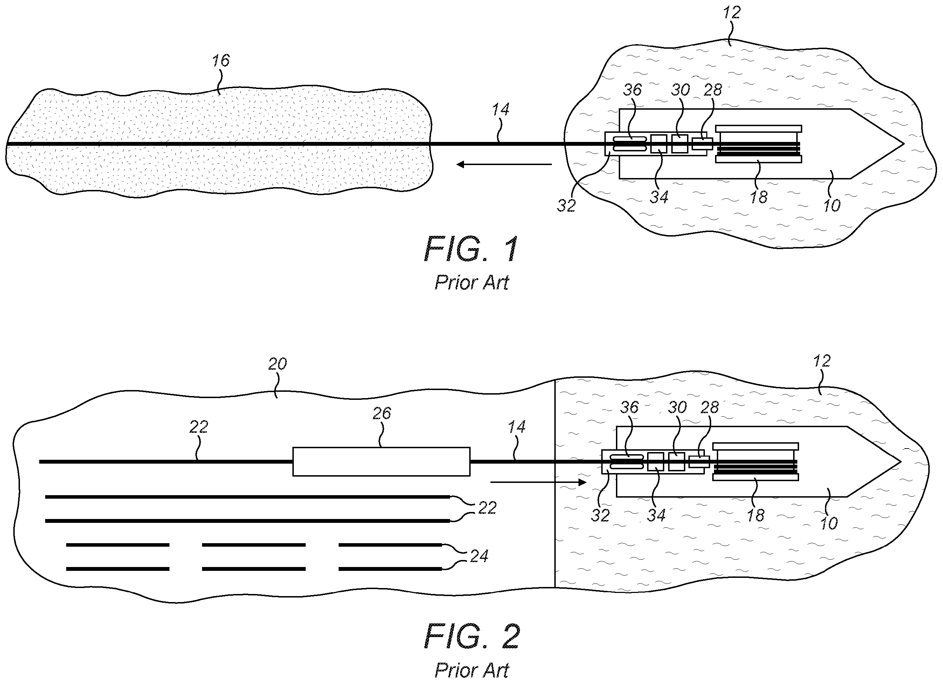

In some cases, a pipeline is fabricated onshore at a yard or spoolbase before being transported offshore for installation. For example, Figure 1 of the drawings shows a reel-lay vessel 10 travelling across the surface 12 of the sea while laying a pipeline 14 onto the seabed 16. The pipeline 14 is nominally rigid but has sufficiently flexibility to bend along its length. This bending deformation remains in the elastic domain provided that an appropriate minimum bending radius (MBR) is observed.

The vessel 10 carries a reel 18, in this example turning about a horizontal axis, onto which the pipeline 14 is spooled during fabrication onshore from lengths of steel pipe. In this respect, Figure 2 shows the reel-lay vessel 10 being loaded at a coastal spoolbase 20 at which the pipeline 14 is fabricated from a succession of pipe stalks 22 joined end to end. Each pipe stalk 22 was fabricated, in turn, from a series of pipe joints 24. A new pipe stalk 22 is added to the trailing end of the pipeline 14 at a series of welding, testing and coating stations 26 and the thus-extended pipeline 14 is spooled onto the reel 18 of the visiting vessel 10.

The bending deformation involved in spooling the pipeline 14 onto the reel 18 exceeds the MBR and hence the elastic limit, thus imparting plastic deformation to the pipe. Consequently, after being unspooled from the reel 18 and before being launched into the sea, the pipeline 14 is guided through an aligner 28 to a straightener system 30 that imparts a suitable degree of reverse plastic deformation to the pipe wall.

The straightener system 30 is mounted on an inclined laying ramp 32 that extends over the stern of the vessel 10. The laying ramp 32 also comprises workstations 34 and a hold-back system 36 that typically comprises tensioners and clamps for supporting the weight of the pipeline 14 suspended as a catenary between the vessel 10 and the seabed 16.

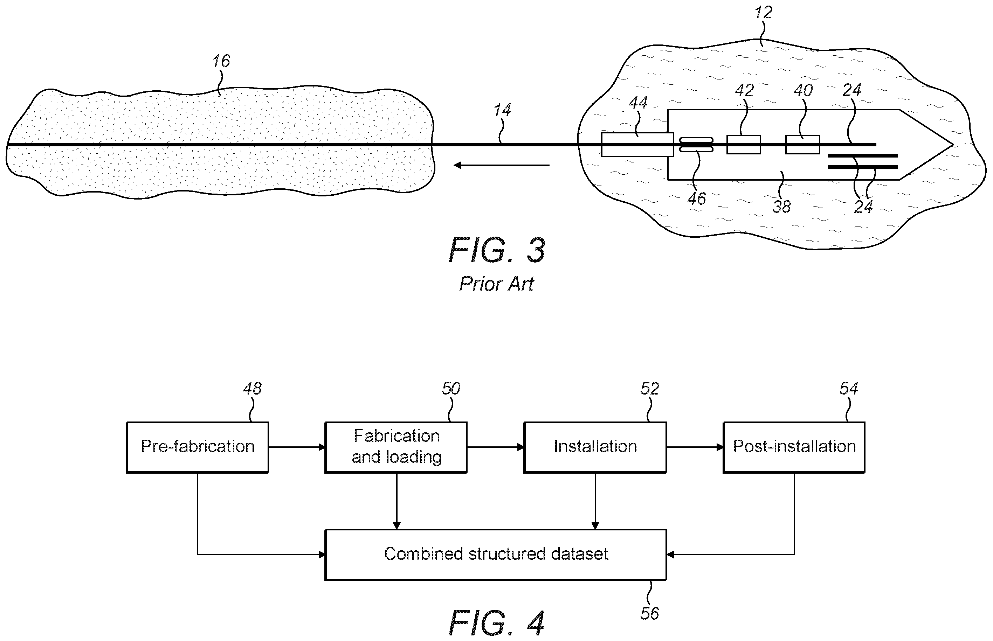

Other pipelay techniques, notably S-lay and J-lay operations, involve fabricating a pipeline at sea aboard a pipelay vessel during installation. In this respect, Figure 3 exemplifies an S-lay operation in which a pipeline 14 is fabricated from a succession of pipe joints 24 along a horizontal firing line of a pipelay vessel 38. On the firing line, the pipeline 14 passes through one or more welding/testing stations 40 at which each new pipe joint 24 is added and then a coating station 42 at which a field joint coating is applied to the welded joint. The pipeline 14 is then launched into the sea over a stinger 44, while a tensioner system 46 applies the hold-back force that is required to support the weight of the pipeline 14 suspended as a catenary between the vessel 38 and the seabed 16. The catenary can comprise sections bent in diverse directions, typically at the exit of the stinger 44 and at the touch-down point where the pipeline 14 comes into contact with the seabed 16.

Another reason to impart longitudinal curvature in a subsea pipeline is to manage lateral buckling. In this respect, thermal loads experienced by a pipeline in use give rise to large axial forces in the pipe wall, especially when starting production or between shutting-down and restarting production. Axial compressive forces in the pipe wall are relieved by horizontal or vertical deflection, or buckling, of the pipeline.

Some pipelines are deliberately shaped to buckle at certain points along their length. In particular, creating curves or loops in a pipeline reduces longitudinal stiffness so as to absorb compressive forces and to promote the appearance of buckles in a controlled manner at those locations.

One buckle mitigation technique is the residual curvature method or RCM, based on the teachings of EP 1358420. The RCM exploits the straightener system of a reel-lay vessel to modify the radius of curvature of the pipeline locally by periodically changing the straightening force. Typically, the pipeline is under-straightened at longitudinal intervals as the pipeline is launched into the sea. This forms a series of laterally-extending thermal expansion loops of locally-increased curvature between straighter portions of lesser curvature.

Another way to mitigate buckling is to lay a pipeline along a sinuously-curved route in which an installation vessel follows a zigzag course during laying. This technique is known in the art as 'snake lay' and is apt to be performed during S-lay, J-lay or reel-lay operations, but especially in S-lay operations.

Another way to mitigate buckling is to lay an overlength of pipeline on a horizontal beam laid on the seabed.

The various deflections experienced by a pipeline before and during installation actually occur in the three dimensions and create residual stresses that tend to generate unpredictable rotation of the pipeline around its longitudinal axis. Thus, the orientation of welds between pipe joints and/or pipe stalks and the angular or circumferential position of defects in those welds can change in various ways as pipelines bend during operations between fabrication and landing on the seabed.

Potentially, those operations may include spooling, initiation, unspooling, straightening, advancing over a stinger and/or buckle mitigation in addition to the pipeline experiencing catenary curvature as it hangs between the surface and the seabed.

Consequently, welds in a pipeline, and defects in those welds, may no longer have the orientation and angular position when on the seabed that they had immediately after welding. Nor will the orientation and position of welds and defects necessarily remain unchanged or consistent throughout the various intermediate operations that cause the pipeline to bend. This creates a challenge because the criticality of defects identified after welding depends on their angular position relative to the plane in which the pipeline bends. In other words, the effect of stress may differ depending on the angular position of a flaw relative to the bend direction and therefore the long-term fatigue resistance of a pipeline may vary in accordance with that relationship. The criticality of defects also depends on their angular position relative to an out-of-roundness profile.

It will therefore be apparent that if the criticality of weld defects is assessed on the basis of a theoretical rather than actual orientation or position during each bending event, that assessment is likely to be incorrect. The resulting uncertainty feeds through into models that underlie digital twins of pipeline installations. There is a tendency to introduce over-conservatism to minimise risk, which could result in the working life of a pipeline being shortened unnecessarily.

It would therefore be highly advantageous to update and improve the accuracy of criticality assessment by determining and recording the actual location of welding flaws in a pipeline as installed on the seabed and as the pipeline is bent at various stages after fabrication, before and during installation. Thus, the invention aims to monitor important information relating to a weld, and to the pipe sections joined by a weld, throughout the entire process from manufacture to installation of a pipeline. Whilst the invention has particular benefits in reel-lay operations and so will be explained in that context, the invention may also have benefit in other pipeline fabrication and installation techniques including S-lay and J-lay.

Associating data with a welded joint, especially spatial information, is described in WO 2020/234546. There, angular markings are recorded and used to generate a compatibility index to determine which pipes can be welded together.

The use of visual markers on pipes to determine and then to correct their position is also known in the art. For example, in a method of aligning pipes end-to-end for welding, WO 2019/101889 teaches that stored information about pipe end bevels can be associated with machine-readable codes distributed around the circumference of the pipe. Reading at least one of the codes informs the relative movement that is required to align the pipes in accordance with a target orientation.

Thus, known prior art teaches the association of pipe records to a pipe end reference or markings, for the purpose of proper alignment for welding two pipes together. However, that prior art is not concerned with the orientation of pipes after welding.

In EP 1008797, data associated with a pipe is recorded before welding and stored for later retrieval for maintenance. Similarly, in JP 3000539, bar codes on pipes are used to identify the pipes during their service life and to retrieve stored information concerning the pipes. However, the identifiers, tags or bar codes are used only to store data and not also to position elements of the system.

DE 102004057433 is concerned with locating the position of damage to an in-service pipeline, such as a sewer pipe, during internal visual inspection by a camera before rehabilitation of the pipeline. Its disclosure is irrelevant to the problem addressed by the invention, or to the solution provided by the invention.

A 2016 document by V. J. Taams (entitled "The onset of pipeline twist during reel-lay operations") describes the painting of stripes onto pipe stalks in order to facilitate the measurement of pipeline twist based on rotation of the stripe markings during spooling on and off the reel, as well as during lowering of the pipeline.

A 2020 publication by Li Bo et. al. (entitled "The Digital Twin of Oil and Gas Pipeline System") describes the potential use of the data associated with an oil and gas pipeline for simulation of various behaviours of the pipeline across its lifecycle via a virtual 'digital twin' model.

It is against this background that the invention has been devised. In one sense, the invention resides in a method of tracking pipeline weld information. The method comprises: marking a pattern on a pipe end; recording weld information, such as weld flaw data and/or a unique weld identifier, associated with a weld made at the pipe end during fabrication of a pipeline; recording images of the pattern as the pipeline is advanced longitudinally in post-fabrication operations; and from the recorded images, determining one or more spatial characteristics of the pipeline at the weld.

Two or more recorded images of the pattern may be time-stamped and optionally such images recorded at different times may be compared.

The spatial characteristics may, for example, comprise angular orientation of the pipeline about a longitudinal axis. In that case, the angular orientation of the pipeline may be determined by measuring angular orientation of the pattern, for example by measuring angular offset of the pattern relative to a vertical plane extending longitudinally along the pipeline.

The spatial characteristics may also comprise longitudinal position of the weld along the pipeline. For example, the longitudinal position of the weld may be determined by counting patterns that pass a viewing point while the pipeline advances longitudinally.

The post-fabrication operations may comprise loading the pipeline onto a reel and/or installing the pipeline to a seabed location. In the former case, images of the pattern may be recorded in one or more of the following instances during or after loading: as the pipeline is advanced along a lay ramp of an installation vessel; as the pipeline is advanced onto a reel of the vessel; and when the pipeline has been spooled onto the reel. Conversely, images of the pattern may be recorded in one or more of the following instances during installation: as the pipeline is unspooled from a reel of the installation vessel; as the pipeline is advanced through lay equipment on a lay ramp of the vessel; and as the pipeline is advanced along a firing line of an installation vessel.

When recording images of the pattern, motion of an installation vessel; position of the installation vessel; parameters of lay equipment of the vessel; and/or position of the pattern may also be recorded and optionally also time-stamped.

Images of the pattern may also be recorded at the seabed location while laying the pipeline and after laying the pipeline.

Pipe end information, such as information concerning pipe material and/or pipe geometry, may be recorded and associated with the weld.

The weld information and spatial characteristics may be used to build or maintain a digital twin of the pipeline. The digital twin may also be built or maintained with reference to the recorded motion or position of the installation vessel; the recorded parameters of lay equipment of the vessel; and/or the recorded position of the pattern. The digital twin may, for example, be used to evaluate fatigue life of the installed pipeline.

The markings of the pattern may extend longitudinally and parallel to each other. For example, the pattern may comprise a central marking, which may be at an upper central position on the pipeline, disposed between at least two ancillary markings angularly spaced from the central marking. Each marking of the pattern is preferably visually distinct from each other marking of the pattern, so that any one marking can be identified even without sight of the other markings.

The disclosure therefore embraces a subsea pipeline having a pipe end pattern comprising a central marking disposed between at least two ancillary markings angularly spaced from the central marking, wherein each marking of the pattern differs from each other marking of the pattern. For example, at least one of the markings may be a continuous line and at least one other of the markings may be an interrupted line.

A field joint coating may be applied and disposed between the patterns of mutually adjoining pipe ends. Longitudinal gaps between the patterns of mutually adjoining pipe ends can be detected to determine the locations of welds along the pipeline. The patterns of mutually adjoining pipe ends are suitably in mutual angular alignment.

The disclosure also encompasses a system for tracking pipeline weld information. The system comprises: a weld information database for recording weld information associated with a weld made at a pipe end during fabrication of a pipeline; and imaging equipment for recording images of a pattern marked on the pipe end to determine, from the recorded images, one or more spatial characteristics of the pipeline at the weld. The imaging equipment is positioned to capture the images as the pipeline is advanced longitudinally in post-fabrication operations such as spooling or installation.

For example, the imaging equipment may be positioned to capture the images on a lay ramp or firing line of an installation vessel, as the pipeline is advanced onto a reel of the vessel, when the pipeline has been spooled onto the reel, as the pipeline is unspooled from the reel, and/or at a seabed location while laying the pipeline.

The disclosure further comprises:
a survey system for determining the position of an installation vessel; a motion reference unit for monitoring motions of the vessel; and a lay monitoring system for monitoring lay equipment of the vessel. A clock input, for example from a GPS system of the vessel, may time-stamp recorded images of the pattern and may also time-stamp data from the survey system, the motion reference unit and/or the lay monitoring system.

The genesis of the invention, and preferred applications of the invention, lie in monitoring flaws or defects in girth welds during stalk fabrication, spooling, unspooling and reel-lay installation of flowlines. An objective of the invention is to automate the measurement of pipeline weld flaws and defects from fabrication through to the installed state on the seabed. The proposed solution can run either in real time or as part of a standalone post-processing application.

The invention supports the objectives of a digital twin, namely to support lifecycle integrity management activities such as life extension, root cause analysis, assessment of risk and inspection planning. This is done by documenting, in a digitally-linked form, geometric and material property data that has been recorded throughout the process from fabrication above the surface through to installation on the seabed. This includes loading information such as the orientation of the pipe stalks and their geometry such as hi-lo and wall thickness, and the loading or bending plane when reeling or during installation.

Installation data including vessel motions, geographical position and tension applied to the pipe can be recorded to allow as-built assessments to be undertaken with as-recorded data rather than making assumptions from the installation analysis. The data can be supplemented with pre-fabrication data, for example regarding pipe material characteristics, and with post-installation data, for example regarding the final pipeline position.

The proposed soution brings together the following actions, namely: marking a pipeline, pipe joint or stalk during fabrication, for example at top dead centre (TDC), to allow for rotation to be monitored; recording non-destructive testing (NDT), automated ultrasonic testing (AUT), welding and/or inspection records during fabrication relative to the marking; digital video recording of the pipeline during loading and installation to allow for markings to be observed, with the video being time-stamped to be integrated with vessel system data; use of machine vision to identify specific markings to measure pipeline rotation; and reporting rotation and position along the pipeline automatically.

More specifically, it is desirable to analyse girth welds within a pipeline buckle, in particular for fatigue issues and for engineering criticality assessment (ECA). To support this, there is a need to: identify each weld by pipeline and location along the pipeline, typically expressed as a kilometre point (KP); obtain mill data for the pipe ends at each weld for end dimensions, out-of-roundness, and preferably an actual stress-strain curve rather than merely a specified minimum yield strength (SMYS); obtain all fit-up records (including internal and external hi-lo), and records for non-destructive examination (NDE) such as AUT, internal camera/laser scanning, manual ultrasonic testing (MUT) and magnetic particle inspection (MPI); and obtain weld cap sanding records, if sanded, namely the final profile, minimum wall thickness and NDE records.

Also, there is a need to identify relative rotation and time stamp of the weld TDC, as it was at the welding station, through the following actions and locations: a first load cycle of spooling the pipeline onto a reel; a second load cycle of unspooling the pipeline toward an aligner, in which case the rotation will be unchanged but the time stamp will be different; a third load cycle as the pipeline passes over the aligner and down the laying ramp; another potential rotation as the pipeline follows a catenary path from the surface to the seabed, via records from touch-down monitoring where the pipeline lands on the seabed; and final rotation through as-laid or as-built records, in which case no further rotation is expected.

Optionally, rotation may be noted and recorded by a survey when a rogue buckle is identified. Additionally, rotation and a time stamp may be recorded if welds are reversed through an aligner or reel to back-up the pipeline for structure tying. Similarly, rotation and a time stamp may be recorded following any reversal of the pipeline through the aligner or reel for contingency operations, such as cutting out a buckle arising upon installation.

Data from a motion reference unit of a vessel, representing motions such as roll, pitch, heave, sway, surge, accelerations, angular rates and velocity, may also be time-stamped. In this way, actual installation loading and the duration of such loading can be applied to a model instead of conservative design installation loading and duration.

Thus, to facilitate digitalisation in a reel-lay context, the system records rotation of the pipe TDC from video footage, using multiple cameras, during: pipeline loading at a spoolbase to record the position of a marking when the pipeline is on a reel; rotation of the pipeline from the reel through the vessel lay system; and touchdown monitoring and/or an as-built survey after the pipeline is laid on seabed

The disclosure provides for the pipeline to be marked for visual identification of a TDC datum. The time required to apply a marking to the pipeline during fabrication should be consistent with the welding time, hence preferably being less than three minutes.

There may, for example, be three markers angularly spaced about the pipeline, namely a central marker at TDC between outer markers at ±90° from the central marker, hence 90° and 270° circumferentially from the central marker. In this respect, pipeline rotation may mean that not all of the markers will be visible from a given viewpoint at any one time.

Pipeline rotation during loading and installation may be recorded relative to a fixed vessel reference plane onboard the pipelay vessel such that changes can be recorded to an accuracy of ±5°. Conversely, pipeline rotation may be recorded relative to earth-centric observations when on the seabed, again such that changes can be recorded to an accuracy of ±5°. In this respect, installation standards based upon the DNV standard *DNVGL-ST-F101 Submarine pipeline systems* require weld flaws to be measured on the seabed with the as-built pipe rotation at each weld recorded with a tolerance of ±5°.

Pipeline rotation processing may be automated based on surface vessel and subsea ROV videos to provide a listing that details rotation of the pipeline at each stage of the installation process. Data from a vessel navigation system, in addition to data representing KP and rotation of the pipeline, may be delivered with respect to time.

The invention offers significant value in mapping as-installed pipeline for any retrospective ECA. The approach may also support the requirements of the pipeline data exchange format (PDEF) initiative.

Optionally, the disclosed system may incrementally count the number of field joints passing through a field of view during loading and installation of a pipeline. The system may also involve recognition of a code, such as a QR code, marked on the pipeline or its constituent sections for pipe asset tracking. Such a code or other marker of the invention could be applied with a handheld inkjet printer.

In preferred situations, abutting pipe ends are marked on each side of a girth weld. The relative position between a pipe rotation reference and a stalk mark is measured and recorded. The stalk mark is used as the measurement start point for an NDT bug to start its measurements.

Cameras record time-stamped videos of the pipeline, including static cameras during spooling or on the lay ramp or lay tower of the installation vessel, and ROV cameras during laying and during an as-built survey. Data from a lay system of the vessel is coordinated with the time-stamped video files.

The various records are gathered together, either in real time or after importing them and the markings on the pipeline are detected so that its position and orientation, especially the angle of the original TDC relative to the vertical, is added to the data set so that full information is available for ECA based on actual measurements. By reviewing this and other data, it is possible to calculate how much of the fatigue budget has been utilised. It may therefore be possible to extend the working life of the pipeline by using this data.

Video records may be interpreted or corrected to convert a visualised angle in 2D into a spatial orientation in 3D. This can be done manually or automatically to be more efficient and potentially to be performed in real time. There may be particular benefits in some applications of the invention, such as post-lay assessment of pipelines laid by the RCM to control buckling.

The disclosure also presents a method to automate follow-up of pipeline weld records. The method comprises: marking an identifier pattern on a pipeline end; during welding of the pipeline end, recording information associated with the weld and associating the records with the identifier pattern; recording at least one time-stamped video so that the identifier pattern is visible on at least one video between the moment of welding and installation on the seabed; and from the video record, associating with the identifier pattern a spatial characteristic of the identifier pattern at several time stamps.

The pipeline may be a pipe stalk for installation by the reel-lay method or a pipe as welded and installed by any offshore pipelay method, such as S-lay or J-lay.

The identifier pattern may, for example, comprise a line segment atop the pipeline, extending longitudinally in the axial direction. The identifier pattern may also comprise a second, dashed or otherwise interrupted line segment parallel to the first line segment, the first and second line segments being spaced circumferentially about the pipeline with a pre-determined angle between them. The spatial characteristic may, for example, be the angle of rotation of the first line segment relative to the vertical direction.

The or each video may be made from successive static cameras installed along an onshore assembly line and/or an offshore firing line. The or each video may also comprise one or more recordings from an underwater vehicle such as an ROV. Information associated with the weld may comprise the results of NDT and/or AUT. The information can also comprise, as a non-limitative list, an identification tag, position along the pipeline, or detected flaws.

Information associated with the weld may be used to evaluate or to re-evaluate fatigue life of the weld after installation. The method may comprise streamlining and automation of video recording, association of the records with the identifier, analysis of the video recordings and calculation of fatigue life by the ECA method.

Thus tracking pipeline weld information comprises recording weld information, such as weld flaw data or a unique weld identifier, associated with a weld made at a pipe end during fabrication of a subsea pipeline. As the pipeline is advanced longitudinally in post-fabrication operations such as spooling or installation, time-stamped images of a pattern marked on the pipe end are recorded. One or more spatial characteristics of the pipeline at the weld, such as angular orientation of the pipeline about a longitudinal axis, are determined from the recorded images.

As mentioned, the invention is defined by the appended claims. To put the invention into context, reference has already been made to Figures 1 to 3 of the accompanying drawings, in which:
Figure 1 is a schematic top plan view of a pipelay vessel laying a subsea pipeline by the reel-lay method;
Figure 2 is a schematic top plan view of the vessel of Figure 1 being loaded with pipeline fabricated at a spoolbase; and
Figure 3 is a schematic top plan view of a pipelay vessel laying a subsea pipeline by the S-lay method.

In order that the invention may be more readily understood, reference will now be made, by way of example, to the remaining drawings in which:
Figure 4 is a process overview diagram;
Figure 5 is a schematic top plan view of opposed pipe sections being prepared to be welded together end-to-end in a pre-fabrication stage;
Figure 6 is a perspective view of an end of a pipe section marked with indicia in accordance with the invention;
Figure 7 corresponds to Figure 5 but shows the pipe sections bearing markings like those shown in Figure 6 and being welded together by a girth weld in a fabrication stage;
Figures 8a, 8b and 8c are, respectively, a top plan view and opposite side views of the conjoined pipe sections of the pipeline, showing the markings of Figures 6 and 7 in more detail;
Figure 9 is a schematic top plan view of the weld between the conjoined pipe sections being examined for defects or flaws;
Figure 10 is a cross-sectional view through the weld between the conjoined pipe sections, showing a defect or flaw detected in the weld and its angular position relative to the indicia marked on the pipe sections;
Figure 11 corresponds to Figure 8a but shows the weld now covered by a field joint coating so that the pipeline is ready for subsequent fabrication, storage, loading, transportation or installation operations;
Figure 12 is a schematic side view of a reel-lay vessel being loaded with pipeline fabricated at a spoolbase;
Figure 13 is a schematic side view of the reel-lay vessel of Figure 12 laying the pipeline offshore;
Figure 14 is a schematic side view of a pipeline landing on the seabed at a touch-down point, at the lower end of a catenary of the pipeline extending toward the surface;
Figure 15 is a schematic partial view of a pipeline of the invention spooled on a reel;
Figure 16 is a schematic perspective view of a pipeline of the invention laid on the seabed; and
Figure 17 is a process overview diagram that corresponds to, but expands upon, Figure 4.

Referring firstly to the process overview for flowline fabrication and installation shown in Figure 4, the process of the invention exemplified here involves collection of data from a pre-fabrication stage 48, a fabrication (including, for reel-lay, loading) stage 50, an installation stage 52 and a post-installation stage 54. The collected data is collated into a combined structured dataset 56 that is eventually used to build and operate a digital twin. The invention is especially concerned with the fabrication, loading and installation stages 50, 52 but other stages will be outlined below for context.

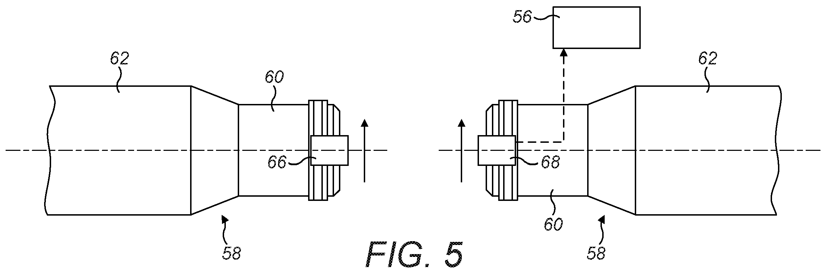

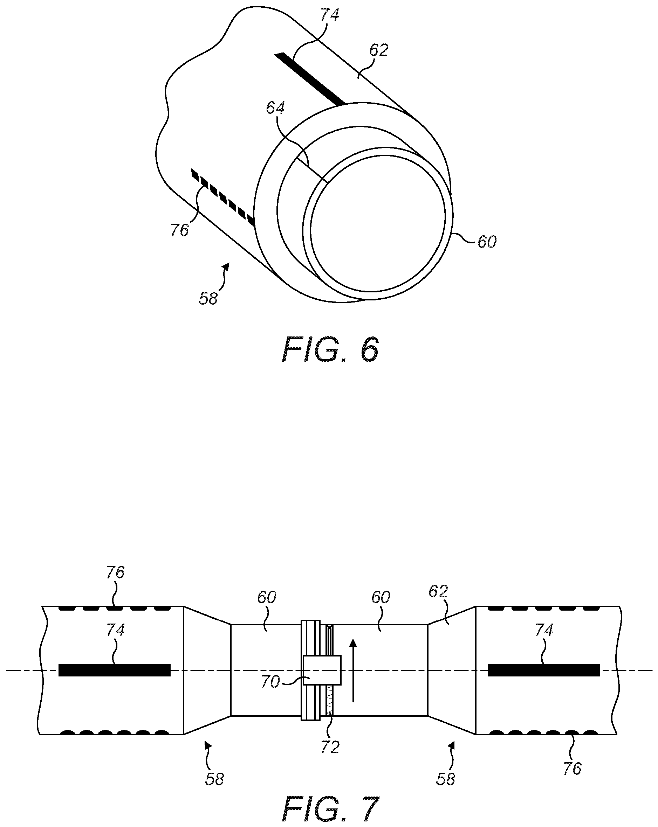

Figures 5 to 11 show facing or conjoined ends of pipe sections 58. With reference to Figure 2, the pipe sections 58 could be either pipe stalks 22 or pipe joints 24. In each case, the pipe section 58 comprises a steel pipe 60 coated with a polymer coating 62 for protection and thermal insulation. As is conventional, the coating 62 is cut back with a chamfered edge, exposing an end of the pipe 60 for bevelling and girth welding to a corresponding pipe section 58 disposed end-to-end. The pipe 60 could have a longitudinal seam weld 64 as shown in Figure 6 but this is optional.

In the pre-fabrication stage 48, a pipe joint database is populated with data for each individual pipe joint 24. Thus, primary measurement of the pipe joints 24 is undertaken at a supplier's mill before the fabrication stage 50. For example, a rotational datum may be marked on the ends of each pipe joint 24 to allow for out-of-roundness measurements to be related to TDC. The pipe joint database forms part of the dataset 56.

Each pipe joint 24 and its ends are uniquely designated by the supplier and tracked through testing and coating before the pipe joint 24 is welded to a free end of another pipe joint 24 when manufacturing a pipe stalk 22 or a pipeline 14 at the fabrication stage. Dimension reports are collated for each pipe joint 24 and added to the pipe joint database. Any damage to a pipe joint 24 is similarly recorded in the pipe joint database.

Mechanically lined pipe (MLP) comprises a host pipe of carbon steel and a liner of corrosion-resistant alloy that is inserted into, and then expanded within, the host pipe. Where MLP is used, pipe joint data is obtained after mechanical lining so that any resultant expansion or deformation of the host pipe can be measured and recorded.

If the pipe joint 24 comprises a seam weld 64, dimension measurements may be referenced to the angular location of the seam weld 64. Also, during welding of each pipe joint 24 at the fabrication stage, the angular relationship between each seam weld 64 and the pipe stalk 22 or pipeline 14 is measured.

The pipe identification number of each pipe joint 24 is extracted from the pipe joint database with its associated attributes. Where a seam weld 64 is present, rotation of each seam weld 64 is recorded relative to the established TDC of the stalk 22.

For CRA lined pipe, fabricated stalks and pipeline, the pipe identification number is verified and markings on the pipe end are transferred to the outer surface of the pipe joint 24 before bevelling commences. The transferred pipe markings are used to measure the angular distance to TDC. Pipe length is measured, for example using an electronic distance measurement tool, and may be recorded in a mobile app and/or on a tally list. The pipe identification number and unique weld identification are similarly recorded and added to the dataset 56 before checking fit-up for compliance with standards. A laser is used to verify hi-lo measurements, which are also recorded and added to the dataset 56.

Figure 5 shows a bevelling tool 66 circling the end of a pipe section 58 on the left to prepare the end of the pipe 60 for welding in the fabrication stage 50. Figure 5 also shows testing equipment 68 such as an NDT bug circling the end of a pipe section 58 on the right to measure the geometry of the end of the pipe 60. Such testing may be performed in the pre-fabrication stage 48, as noted above, or may be repeated at the fabrication stage 50. Data from the testing equipment 68 is added to the dataset 56 as shown.

During the fabrication stage 50, the pipe sections 58 are welded together at a spoolbase like that shown in Figure 2. Thus, the pipe sections 58 may be either pipe joints 24 assembled to form a pipe stalk 22 or pipe stalks 22 assembled to form a pipeline 14. Figure 7 shows the pipe sections 58 brought into mutual end-to-end abutment and a welding bug 70 circling the interface between the pipes 60 to form a girth weld 72 between the pipe sections 58 in multiple circumferential passes.

Figures 6, 7 and 8a to 8c show that patterns of markings are stencilled on the facing pipe sections 58, each pattern comprising a primary central marking 74 at TDC and ancillary markings 76 at 90° and 270° (±90°) relative to TDC about the circumference,. The markings 74, 76 are positioned sufficiently inboard of the facing ends of the pipe sections 58 as to remain visible beyond a field joint coating to be applied later around the weld 72. The markings 74, 76 are shown here applied to the pipe sections 58 just before welding but could instead be applied to the pipe sections 58 immediately after welding.

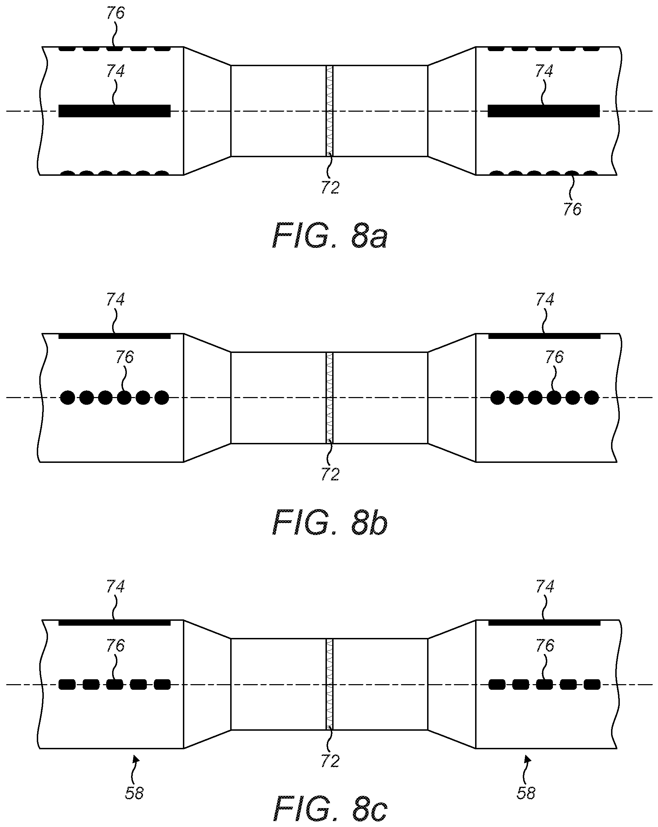

As best appreciated in the top plan view and respective side views of Figures 8a to 8c, the central marking 74 and the ancillary markings 76 all differ from each other in appearance so that they can be distinguished visually from each other. Consequently, the orientation of the pipeline 14 about its longitudinal axis, and particularly the angle of its original TDC relative to the vertical, can be determined by visual inspection even if only one or two of the markings 76 are visible from a given viewpoint.

In this example, the markings 74, 76 are all elongate and all extend longitudinally parallel to each other and to the central longitudinal axis of the pipeline 14. Further, in this example, the central marking 74 is a continuous stripe whereas the ancillary markings 76 are interrupted or intermittent. Specifically, the ancillary marking 76 on one side is exemplified here by a row of dots or circles and the ancillary marking 76 on the opposite side is exemplified here by a row of dashes or rectangles.

A datum is measured and recorded on the pipe sections 58 being welded in relation to TDC. In particular, rotation of each pipe section 58 established by laser measurement is recorded relative to the established TDC of the stalk 22 or pipeline 14. As each stalk 22 or pipeline 14 is fabricated, a common TDC for the fabricated stalk 22 and pipeline 14 will be generated both virtually and visibly to be mapped to the pipeline 14 when on the seabed.

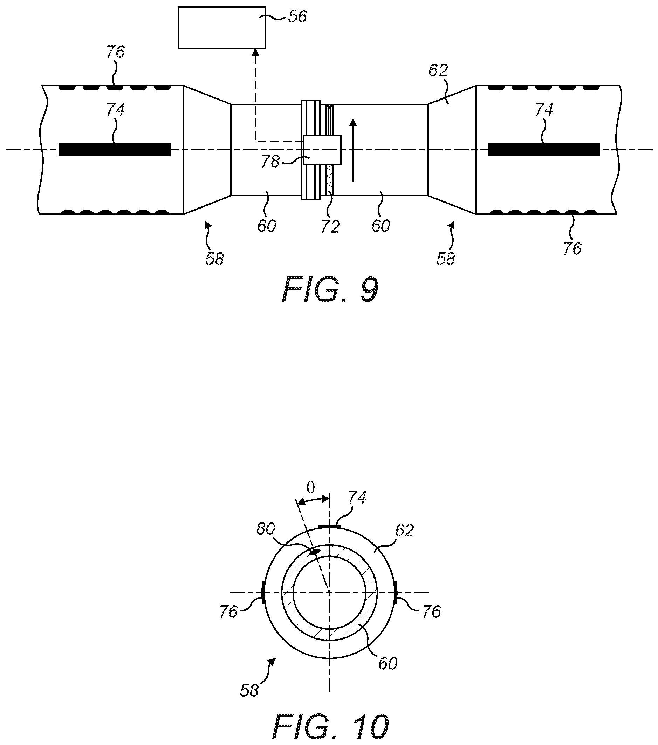

Once a root pass, hot pass and first fill pass have been completed, the weld 72 is scanned and tested as shown in Figure 9, where a scanning bug 78 circles the conjoined pipe sections 58 to travel along and around the weld 72. Scan data output from the scanning bug 78 is added to the dataset 56 as shown.

The weld scan record is evaluated and interpreted in accordance with the applicable acceptance criteria and digital reports are raised, with the angular or circumferential positions of defects or flaws 80 referenced to TDC and hence to the central marking 74 as shown by angle θ in Figure 10.

After completion of the weld 72, an internal laser and photo survey may be undertaken to determine internal diameter and post-weld hi-lo. An internal scan may, for example, be performed using a scanner on an internal line-up clamp (ILUC) upon completion of the root pass. Laser hi-lo measurements around the internal circumference are mapped from the datum. Internal images and laser scans may be recorded in relation to the weld ID within an as-built pipe fabrication record, with the measurements incorporated into a linear pipeline record. Internal images and laser records are recorded in relation to the stalk and pipeline TDC. Again, the data is referenced to TDC and any angular misalignment between TDC and the rotational datum is recorded. All of this data is similarly added to the dataset 56.

Where stalk-to-stalk tie-ins are made, the reporting and digital as-built requirements may differ from fabricating the stalks themselves. Specifically, stalk-to-stalk angular orientation is recorded, TDC to TDC. The resulting stalk TDC is represented by aligned central markings 74 along each fabricated stalk that, together with the ancillary markings 76 at ±90°, provide a continuous record of the datum for hi-lo and weld test records that remains clearly identifiable on the seabed.

More generally, upon completion of stalk or pipeline fabrication, an integrated pipe section database is generated with the hi-lo measurements noted relative to the TDC of the stalk or pipeline. The TDC may be marked using a lay line during stalk fabrication to allow pipe reference misalignment to be measured.

Once the girth weld has been formed at a field joint and the adjoining pipe joints have been identified, a pipe section database can be generated as a linear record or stalk sheet. The length of the pipe section is derived from the individual pipe joints to allow for correlation with the pipeline product passing through the tensioner of the installation vessel.

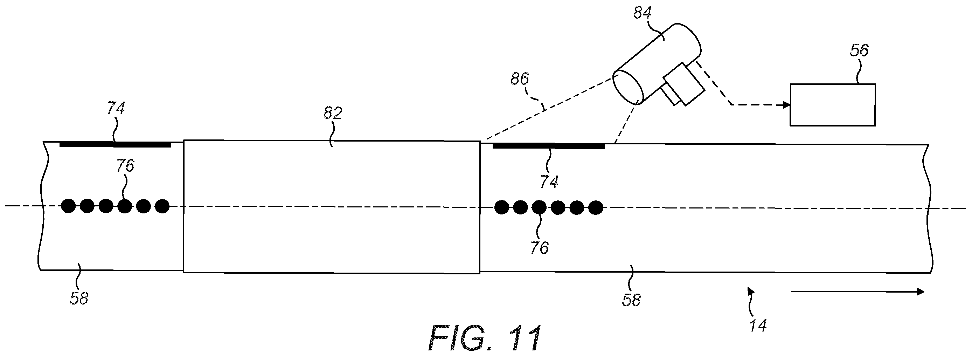

Next, as shown in Figure 11, a field joint coating 82 is formed around the weld 72 between the parent coatings 62 of the conjoined pipe sections 58. As noted above, the markings 74, 76 are sufficiently far inboard as not to be obscured by the field joint coating 82 and therefore remain visible when the pipeline 14 has been laid on the seabed.

Once the field joint coating 82 has cured, the pipeline 14 is ready to be advanced as shown in Figure 11, in particular to be spooled onto the reel of an installation vessel being loaded at the spoolbase. At least one camera 84 with a field of view 86 captures a video file or still image of the markings 74, 76 to confirm the initial orientation of the pipeline 14 about its central longitudinal axis. The resulting data is added to the dataset 56.

It will be apparent that short longitudinal gaps between sets of markings 74, 76 infer the presence of a field joint coating 82, and thus an underlying weld 72, between those sets of markings 74, 76. This is helpful for visual identification of interfaces between pipe sections 58 to determine positions along the pipeline 14 and to monitor longitudinal movement of the pipeline 14 during spooling and installation.

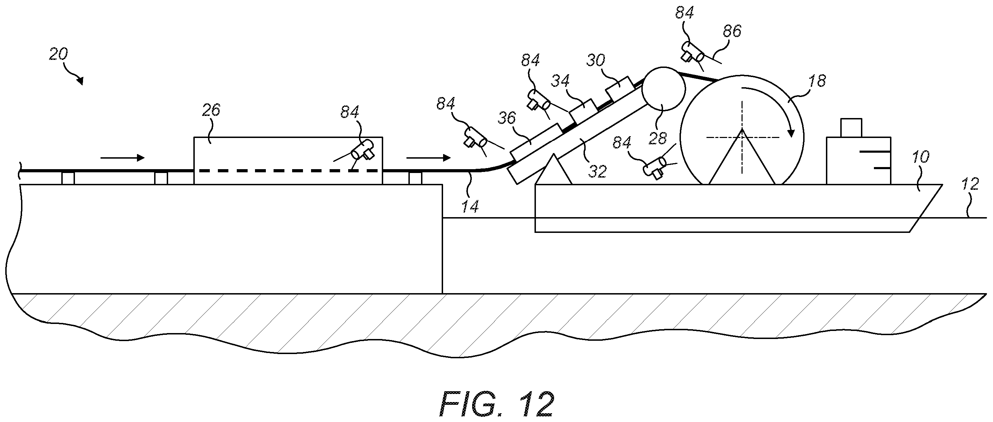

Moving on now to Figures 12 to 14, these drawings show that additional cameras 84 monitor the markings 74, 76 to confirm the orientation of the pipeline 14 during loading onto a pipelaying vessel 10 and during installation offshore, and potentially also after laying on the seabed 16. In each case, the data output from the cameras 84 is added to the dataset 56. In particular, during loading and installation of the pipeline 14, time-stamped video data is recorded to capture the markings 74, 76 to allow the TDC, and hence the orientation of the pipeline 14 about its longitudinal axis, to be identified at various locations on the laying ramp 32, at the reel 18 and during touchdown on the seabed 16.

For the installation database and for a pipe tally entry, the individual field joints are identified as they pass through the vessel 10 and up or down the laying ramp 32 during loading and installation of the pipeline 14. For reel-lay operations, the unique pipe ID need not be recorded if the field joint number is initially calculated from the reel speed, wrap diameter and fabricated stalk length. Video data from the vessel 10 and an ROV at touchdown may be recorded to allow the calculated field joint number to be checked against the video record and, if necessary, amended in the digital data records.

Figure 12 shows the invention in use when a vessel 10 is being loaded at a spoolbase 20 like that shown in Figure 2. The operations shown in Figures 5 to 11 take place at the welding, testing and coating stations 26 of the spoolbase 20. Additional cameras 84 view the entrance of the tensioner 36, the exit of the tensioner 36, the entrance to the reel 18 and the reel 18 itself to monitor the markings 74, 76 during loading or spooling of the pipeline 14, as the pipeline 14 is advanced through the field of view 86 of each camera 84.

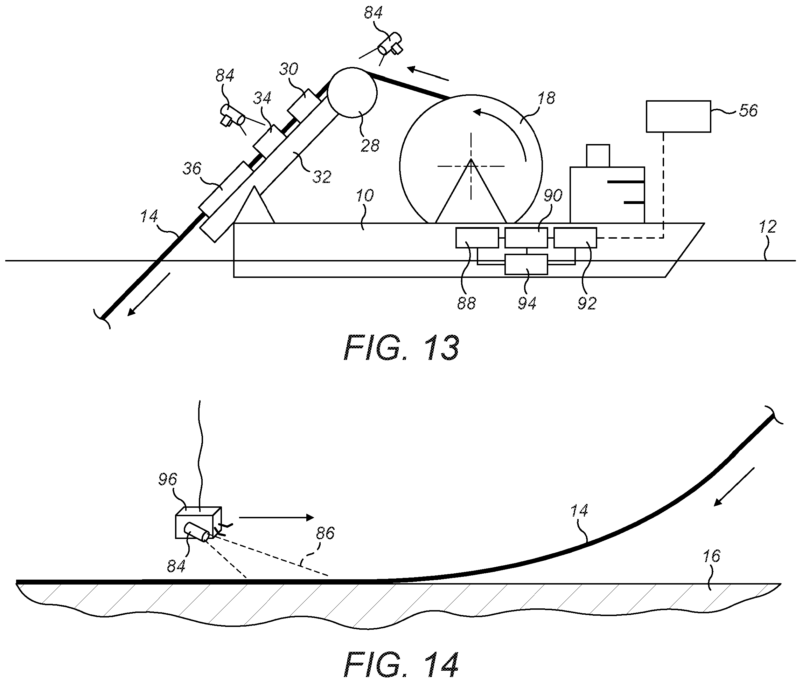

Figure 13 shows further cameras 84 positioned on the vessel 10 to view the aligner 30, especially during pipelay initiation, and to view the workstations 34, especially during pipelay itself. In particular, multiple cameras 84 may view upper and lower workstations 34 and a travelling work platform associated with the workstations 34.

Figure 13 also shows onboard systems of the vessel 10, namely: a survey system 88 for determining the position of the vessel 10 in relation to the design KP of the pipeline 14; a motion reference unit (MRU) 90 for continuously monitoring and recording motions of the vessel 10, such as roll, pitch, heave, sway, surge, accelerations, angular rates and velocity; a lay monitoring system 92 for continuously monitoring and recording behaviour of the various items of lay equipment of the vessel 10; and a GPS system 94 that, in addition to providing vessel location data to the survey system 88, provides a time pulse that can be used to synchronise outputs of the survey system 88, the MRU 90 and the lay monitoring system 92. A time pulse could, of course, be provided from another source or by another clock system. Time-stamping allows vessel position records, vessel motion records and lay system records to be consolidated so that actual installation loading and the duration of such loading can be applied to a digital twin model.

During offshore operations, the survey system 88 onboard the vessel 10 calculates the position of the vessel 10 in relation to the pipeline design KP and referenced to time provided by the GPS system 94. Motion and acceleration data of the vessel 10 is recorded by the MRU 90 throughout the installation campaign simultaneously with position data of the vessel 10 for integration with the as-built records. Reel lay, winch and tensioner data is recorded digitally within the lay monitoring system 92.

The resulting data is transferred to the dataset 56 in two parts, namely from the survey system 88 and lay monitoring system 90, for integration and mapping to the seabed 16. For consistency of reporting, girth welds or field joints can be used to record position along the pipeline 14 for a KP database.

Figure 14 shows an underwater vehicle such as an ROV 96 monitoring touchdown of the pipeline 14 on the seabed 16 during lay operations, recording positional data and video data. In particular, the ROV 96 uses its camera 84 to monitor the markings 74, 76 during touch-down of the pipeline 14. Thus, the ROV 96 moves along the laid pipeline 14 to follow longitudinal progression of the touch-down point across the seabed 16.

Two or more cameras 84 may be located at any of the locations referenced in Figures 12, 13 and 14 so that their combined fields of view 86 allow greater visibility of the markings 74, 76. In particular, pairs of cameras 84 could define viewpoints from opposite sides of the pipeline 14 to increase coverage of the circumference of the pipeline 14.

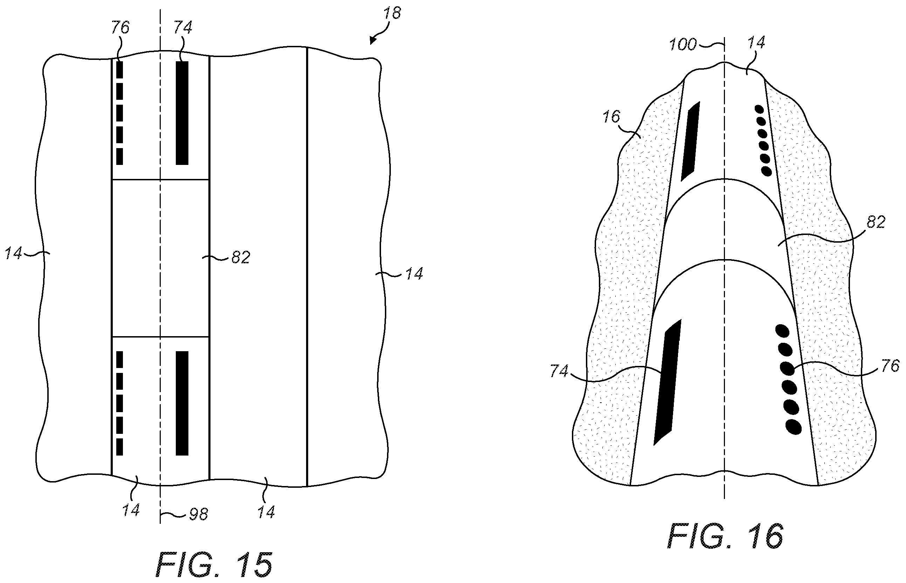

Figure 15 shows part of the field of view of a camera 84 positioned on the vessel 10 to view the pipeline 14 spooled on the reel 18. Successive coils of the spooled pipeline 14 are shown here side-by-side. One of those coils displays markings 74, 76 on each side of a field joint coating 82. It is immediately apparent that the pipeline 14 has turned about its longitudinal axis relative to a fixed vertical reference plane 98 of the vessel 10. The extent of rotation can be determined by manual or automated analysis of images from the camera 84.

Similarly, Figure 16 shows part of the field of view of a camera 84 carried by the ROV 96 to view the pipeline 14 when laid on the seabed 16. Again, markings 74, 76 are visible on each side of a field joint coating 82. In this case, it is immediately apparent that the pipeline 14 has turned about its longitudinal axis relative to a vertical earth-centric reference plane 100. As before, the extent of rotation can be determined by manual or automated analysis of images from the camera 84.

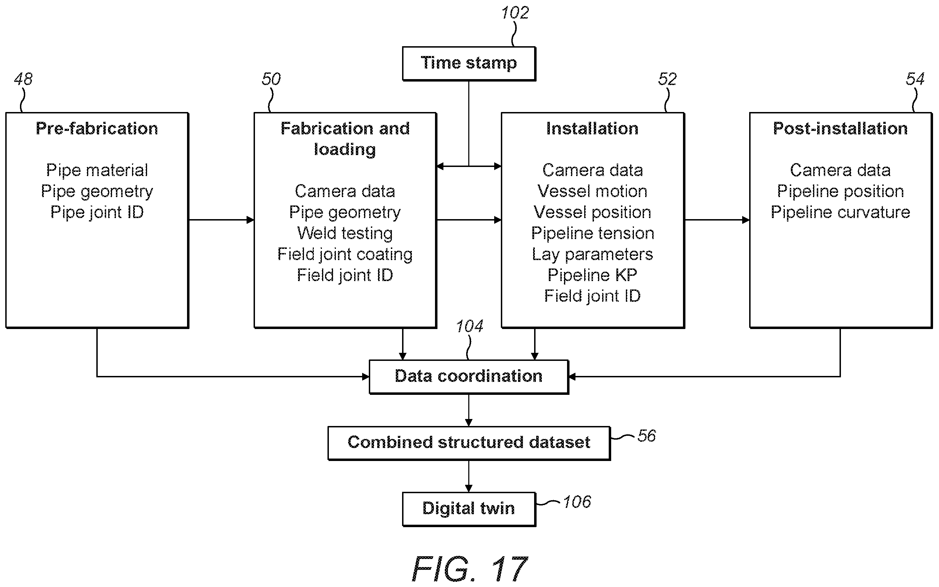

Turning finally to Figure 17, this diagram elaborates on the process overview shown in Figure 4 to summarise key points of the detailed discussion above. As before, the diagram shows a pre-fabrication stage 48, a fabrication (including, for reel-lay, loading) stage 50, an installation stage 52 and a post-installation stage 54. Time-stamping 102 is shown here as being applied to data gathered at the fabrication and loading stage 50 and at the installation stage 52, but could in principle also be applied to data gathered at the pre-fabrication stage 48 and/or at the post-installation stage 54.

At the pre-fabrication stage 48, data is gathered as to the material, geometry and ID of pipe joints or pipe stalks. At the fabrication and loading stage 50, data is gathered during fabrication as to pipe geometry, weld testing and other pipe inspection, and field joint coating. Then, camera data and field joint ID data is gathered during loading. At the installation stage 52, camera data is supplemented by data as to vessel motion, vessel position, pipeline tension and other lay parameters, pipeline KP and field joint ID. Finally, at the post-installation stage 54, data is gathered at the seabed as to pipeline position and pipeline curvature, in addition to camera data. The data from these and other sources is coordinated and consolidated at 104 to create the combined structured dataset 56 that, in turn, is used to build and run the digital twin 106.

Many variations are possible. For example, it will be apparent that the ROV 96 shown in Figure 14 could move along the pipeline 14 in either direction after laying to survey the laid pipeline 14, thereby to confirm the as-laid orientation of the markings 74, 76. Such a post-installation or as-built survey is an optional variation.

During the as-built survey, the markings 74, 76 are checked at intervals along the pipeline 14 to allow rotation about the longitudinal axis to be determined, hence to determine the position of TDC and all features measured with reference to TDC at the fabrication stage.

For as-built surveying and processing at the post-installation stage, an as-fabricated runline may be generated before the survey based on the fabricated pipeline record. The total product length is calculated from the linear pipeline record length, the as-installed position and depth from a post-hydrotest survey. The video record from the survey should match the fabricated length for consistency with any data comparison for future condition monitoring surveys.

Data recorded onboard the vessel 10 that cannot easily be captured automatically may be recorded manually, for example: start and stop times of unplanned pauses to lay; start and stop times of planned pauses to lay, including incorporating structures and temporary abandonment or recovery operations; field joint coatings; and changes in ramp angle and lay configuration. Recording various actions like these undertaken on the vessel 10 may give helpful input to the digital twin database by providing context to events appearing in the dataset 56.

While the above details are provided for explanatory purposes, the invention is defined by the appended claims.

## Claims

1. A method of monitoring flaws in pipeline welds, the method comprising:
marking a pattern (74, 76) on a pipe end;
the method further comprising the following computer-implemented steps:
recording, in a weld information database (56), weld information associated with a weld (72) made at the pipe end during fabrication of a pipeline (14), the weld information comprising weld flaw data;
recording images of the pattern (74, 76) in the weld information database (56) as the pipeline is advanced longitudinally in post-fabrication operations; and
from the recorded images, determining one or more spatial characteristics of the pipeline (14) at the weld,
wherein the spatial characteristics comprise angular orientation of the pipeline (14) about a longitudinal axis of the pipeline (14), and
wherein the step of determining one or more spatial characteristics of the pipeline (14) comprises determining the angular orientation of the pipeline (14) by measuring angular orientation of the pattern (74, 76).

2. The method of Claim 1, comprising time-stamping two or more recorded images of the pattern (74, 76).

3. The method of Claim 2, comprising comparing the images of the pattern (74, 76) recorded at different times.

4. The method of any preceding claim, wherein the weld information comprises a unique weld identifier.

5. The method of any preceding claim, comprising measuring angular offset of the pattern (74, 76) relative to a vertical plane extending longitudinally along the pipeline (14).

6. The method of any preceding claim, wherein the spatial characteristics comprise longitudinal position of the weld (72) along the pipeline (14).

7. The method of Claim 6, comprising determining the longitudinal position of the weld (72) by counting patterns (74, 76) passing a viewing point while advancing the pipeline (14) longitudinally.

8. The method of any preceding claim, wherein the post-fabrication operations comprise loading the pipeline (14) onto a reel and/or installing the pipeline to a seabed location (16).

9. The method of Claim 8, comprising recording images of the pattern (74. 76) in one or more of the following instances during or after loading: as the pipeline (14) is advanced along a lay ramp of an installation vessel (10); as the pipeline (14) is advanced onto a reel of the vessel (10); and when the pipeline (14) has been spooled onto the reel.

10. The method of Claim 8 or Claim 9, comprising recording images of the pattern (74, 76) in one or more of the following instances during installation: as the pipeline (14) is unspooled from a reel of the installation vessel (10); as the pipeline (14) is advanced through lay equipment on a lay ramp of the vessel (10); and as the pipeline (14) is advanced along a firing line of an installation vessel (14).

11. The method of any of Claims 8 to 10, comprising recording images of the pattern (74, 76) at the seabed location (16) while laying the pipeline (14).

12. The method of any of Claims 8 to 11, further comprising, when recording images of the pattern (74, 76), recording: motion of an installation vessel (10); position of the installation vessel (10); parameters of lay equipment of the vessel (10); and/or position of the pattern (74, 76).

13. The method of Claim 12, comprising time-stamping the recorded motion or position of the installation vessel (10); the recorded parameters of lay equipment of the vessel (10); and/or the recorded position of the pattern (74, 76).

14. The method of any preceding claim, further comprising: recording images of the pattern (74, 76) at the seabed location (16) after laying the pipeline (14); and from the recorded images, determining at least one spatial characteristic of the pipeline (14) at the weld (72).

15. The method of any preceding claim, further comprising recording pipe end information and associating that information with the weld (72).

16. The method of Claim 15, wherein the pipe end information comprises information concerning pipe material and/or pipe geometry.

17. The method of any preceding claim, comprising using the weld information and spatial characteristics to build or maintain a digital twin (106) of the pipeline (14).

18. The method of Claim 17 when depending from Claim 12 or Claim 13, further comprising building or maintaining the digital twin (106) with reference to the recorded motion or position of the installation vessel (10); the recorded parameters of lay equipment of the vessel (10); and/or the recorded position of the pattern (74, 76).

19. The method of Claim 17 or Claim 18, comprising using the digital twin (106) to evaluate fatigue life of the installed pipeline (14).

20. The method of any preceding claim, wherein the pattern (74, 76) comprises a central marking (74) disposed between at least two ancillary markings (76) angularly spaced from the central marking (74).

21. The method of Claim 20, wherein the central marking (74) is made at an upper central position of the pipeline (14).

22. The method of Claim 20 or Claim 21, wherein each marking of the pattern is visually distinct from each other marking of the pattern.

23. The method of any preceding claim, comprising applying a field joint coating (82) between the patterns (74, 76) of mutually adjoining pipe ends.

24. The method of any preceding claim, comprising detecting longitudinal gaps between the patterns (74, 76) of mutually adjoining pipe ends to determine weld locations along the pipeline (14).

25. A system for monitoring flaws in pipeline welds, the system comprising:
a weld information database (56) for recording weld information associated with a weld (72) made at a pipe end during fabrication of a pipeline (14), the weld information comprising weld flaw data; and
imaging equipment (84) for recording images of a pattern (74, 76) marked on the pipe end in the weld information database (56); the system further comprising means to determine, from the recorded images, one or more spatial characteristics of the pipeline (14) at the weld (72) including angular orientation of the pipeline (14) about a longitudinal axis of the pipeline (14), the angular orientation being determined by measuring angular orientation of the pattern (74,76); wherein the imaging equipment (84) is positioned to capture the images as the pipeline (14) is advanced longitudinally in post-fabrication operations.

26. The system of Claim 25, wherein the imaging equipment (84) is positioned to capture the images on a lay ramp or firing line of an installation vessel (10), as the pipeline (14) is advanced onto a reel of the vessel (10), when the pipeline (14) has been spooled onto the reel, as the pipeline (14) is unspooled from the reel, and/or at a seabed location (16) while laying the pipeline (14).

27. The system of Claim 25 or Claim 26, further comprising: a survey system (88) for determining the position of an installation vessel (10); a motion reference unit (90) for monitoring motions of the vessel (10); and a lay monitoring system (92) for monitoring lay equipment of the vessel (10).

28. The system of any of Claims 25 to 27, comprising a clock input for time-stamping recorded images of the pattern.

29. The system of Claim 28 when dependent on Claim 27, wherein the clock input is also arranged to time-stamp data from the survey system (88), the motion reference unit (90) and/or the lay monitoring system (92).

30. The system of any of Claims 25 to 29, further comprising a subsea pipeline (14) having a pipe end pattern comprising a central marking (74) disposed between at least two ancillary markings (76) angularly spaced from the central marking (74), wherein each marking of the pattern differs from each other marking of the pattern.

31. The system of Claim 30, wherein at least one of the markings is a continuous line and at least one other of the markings is an interrupted line.

32. The system of Claim 30 or Claim 31, wherein the markings of the pattern (74, 76) extend longitudinally and are parallel to each other.

33. The system of any of Claims 30 to 32, wherein a field joint coating (82) is disposed between the patterns (74, 76) of mutually adjoining pipe ends.

34. The system of any of Claims 30 to 33, wherein the patterns (74, 76) of mutually adjoining pipe ends are in mutual angular alignment.

## Patentansprüche

1. Verfahren zum Überwachen von Fehlern in Rohrleitungsschweißnähten, wobei das Verfahren Folgendes umfasst:
Anzeichnen eines Musters (74, 76) an einem Rohrende;
wobei das Verfahren ferner die folgenden computerimplementierten Schritte umfasst:
Aufzeichnen, in einer Schweißnahtinformations-Datenbank (56), von Schweißnahtinformationen, die mit einer während der Herstellung einer Rohrleitung (14) an dem Rohrende erzeugten Schweißnaht (72) assoziiert sind, wobei die Schweißnahtinformationen Schweißnahtfehlerdaten umfassen;
Aufzeichnen von Bildern des Musters (74, 76) in der Schweißnahtinformationsdatenbank (56), während die Rohrleitung bei Vorgängen nach der Herstellung in Längsrichtung voranbewegt wird; und
Bestimmen einer oder mehrerer räumlicher Eigenschaften der Rohrleitung (14) an der Schweißnaht aus den aufgezeichneten Bildern,
wobei die räumlichen Eigenschaften die Winkelausrichtung der Rohrleitung (14) um eine Längsachse der Rohrleitung (14) umfassen, und
wobei der Schritt des Bestimmens einer oder mehrerer räumlicher Eigenschaften der Rohrleitung (14) das Bestimmen der Winkelausrichtung der Rohrleitung (14) durch Messen der Winkelausrichtung des Musters (74, 76) umfasst.

2. Verfahren nach Anspruch 1, umfassend das Zeitstempeln von zwei oder mehr aufgezeichneten Bildern des Musters (74, 76).

3. Verfahren nach Anspruch 2, umfassend das Vergleichen der zu unterschiedlichen Zeiten aufgezeichneten Bilder des Musters (74, 76).

4. Verfahren nach einem der vorangehenden Ansprüche, wobei die Schweißnahtinformationen eine eindeutige Schweißnahtkennung umfassen.

5. Verfahren nach einem der vorangehenden Ansprüche, umfassend das Messen des Winkelversatzes des Musters (74, 76) relativ zu einer sich in Längsrichtung entlang der Rohrleitung (14) erstreckenden vertikalen Ebene.

6. Verfahren nach einem der vorangehenden Ansprüche, wobei die räumlichen Eigenschaften die Längsposition der Schweißnaht (72) entlang der Rohrleitung (14) umfassen.

7. Verfahren nach Anspruch 6, umfassend das Bestimmen der Längsposition der Schweißnaht (72) durch Zählen von eine Betrachtungsstelle passierenden Mustern (74, 76), während die Rohrleitung (14) in Längsrichtung voranbewegt wird.

8. Verfahren nach einem der vorangehenden Ansprüche, wobei die Vorgänge nach der Herstellung das Laden der Rohrleitung (14) auf eine Spule und/oder das Installieren der Rohrleitung an einem Ort (16) auf dem Meeresboden umfassen.

9. Verfahren nach Anspruch 8, umfassend das Aufzeichnen von Bildern des Musters (74, 76) in einem oder mehreren der folgenden Fälle während oder nach dem Laden: während die Rohrleitung (14) entlang einer Verlegerampe eines Installationsschiffs (10) voranbewegt wird; während die Rohrleitung (14) auf eine Spule des Schiffs (10) voranbewegt wird; und wenn die Rohrleitung (14) auf die Spule gewickelt wurde.

10. Verfahren nach Anspruch 8 oder 9, umfassend das Aufzeichnen von Bildern des Musters (74, 76) in einem oder mehreren der folgenden Fälle während der Installation: während die Rohrleitung (14) von einer Spule des Installationsschiffs (10) abgewickelt wird; während die Rohrleitung (14) durch Verlegeausrüstung auf einer Verlegerampe des Schiffs (10) voranbewegt wird; und während die Rohrleitung (14) entlang einer Firing Line eines Installationsschiffs (14) voranbewegt wird.

11. Verfahren nach einem der Ansprüche 8 bis 10, umfassend das Aufzeichnen von Bildern des Musters (74, 76) an dem Ort (16) auf dem Meeresboden während des Verlegens der Rohrleitung (14).

12. Verfahren nach einem der Ansprüche 8 bis 11, ferner umfassend, beim Aufzeichnen von Bildern des Musters (74, 76), das Aufzeichnen von: der Bewegung eines Installationsschiffs (10); der Position des Installationsschiffs (10); Parametern von Verlegeausrüstung des Schiffs (10); und/oder der Position des Musters (74, 76).

13. Verfahren nach Anspruch 12, umfassend das Zeitstempeln der aufgezeichneten Bewegung oder Position des Verlegeschiffs (10); der aufgezeichneten Parameter der Verlegeausrüstung des Schiffs (10); und/oder der aufgezeichneten Position des Musters (74, 76).

14. Verfahren gemäß einem der vorangehenden Ansprüche, das ferner Folgendes umfasst: Aufzeichnen von Bildern des Musters (74, 76) an dem Ort (16) auf dem Meeresboden nach dem Verlegen der Rohrleitung (14); und Bestimmen mindestens einer räumlichen Eigenschaft der Rohrleitung (14) an der Schweißnaht (72) aus den aufgezeichneten Bildern.

15. Verfahren nach einem der vorangehenden Ansprüche, ferner umfassend das Aufzeichnen von Rohrendeinformationen und Assoziieren dieser Informationen mit der Schweißnaht (72).

16. Verfahren nach Anspruch 15, wobei die Rohrendeinformationen das Rohrmaterial und/oder die Rohrgeometrie betreffende Informationen umfassen.

17. Verfahren nach einem der vorangehenden Ansprüche, umfassend das Verwenden der Schweißnahtinformationen und der räumlichen Eigenschaften, um einen digitalen Zwilling (106) der Rohrleitung (14) zu erstellen oder zu pflegen.

18. Verfahren nach Anspruch 17, wenn abhängig von Anspruch 12 oder Anspruch 13, umfassend das Erstellen oder Pflegen des digitalen Zwillings (106) unter Bezugnahme auf die aufgezeichneten Bewegung oder Position des Verlegeschiffs (10); die aufgezeichneten Parameter der Verlegeausrüstung des Schiffs (10); und/oder die aufgezeichnete Position des Musters (74, 76).

19. Verfahren nach Anspruch 17 oder Anspruch 18, umfassend das Verwenden des digitalen Zwillings (106), um die Dauerstandfestigkeit der installierten Rohrleitung (14) zu beurteilen.

20. Verfahren nach einem der vorangehenden Ansprüche, wobei das Muster (74, 76) eine mittige Markierung (74) umfasst, die zwischen mindestens zwei von der mittigen Markierung (74) winkelmäßig beabstandeten Hilfsmarkierungen (76) angeordnet ist.

21. Verfahren nach Anspruch 20, wobei die mittige Markierung (74) an einer oberen mittigen Position der Rohrleitung (14) gebildet wird.

22. Verfahren nach Anspruch 20 oder Anspruch 21, wobei sich die Markierungen des Musters jeweils von jeder anderen Markierung des Musters visuell unterscheiden.

23. Verfahren nach einem der vorangehenden Ansprüche, umfassend das Auftragen einer Feldmuffenbeschichtung (82) zwischen den Mustern (74, 76) aneinander angrenzender Rohrenden.

24. Verfahren nach einem der vorangehenden Ansprüche, umfassend das Erkennen von Längslücken zwischen den Mustern (74, 76) aneinander angrenzender Rohrenden, um Schweißnahtorte entlang der Rohrleitung (14) zu bestimmen.

25. System zum Überwachen von Fehlern in Rohrleitungsschweißnähten, wobei das System Folgendes umfasst:
eine Schweißnahtinformations-Datenbank (56) zum Aufzeichnen von Schweißnahtinformationen, die mit einer während der Herstellung einer Rohrleitung (14) an einem Rohrende erzeugten Schweißnaht (72) assoziiert sind, wobei die Schweißnahtinformationen Schweißnahtfehlerdaten umfassen; und
Abbildungsausrüstung (84) zum Aufzeichnen von Bildern eines auf dem Rohrende angezeichneten Musters (74, 76) in der Schweißnahtinformationsdatenbank (56);
wobei das System ferner Mittel zum Bestimmen einer oder mehrerer räumlicher Eigenschaften der Rohrleitung (14) an der Schweißnaht (72), einschließlich der Winkelausrichtung der Rohrleitung (14) um eine Längsachse der Rohrleitung (14) aus den aufgezeichneten Bildern umfasst, wobei die Winkelausrichtung durch Messen der Winkelausrichtung des Musters (74, 76) bestimmt wird;
wobei die Abbildungsausrüstung (84) positioniert ist, um die Bilder zu erfassen, während die Rohrleitung (14) in Vorgängen nach der Herstellung in der Längsrichtung voranbewegt wird.

26. System nach Anspruch 25, wobei die Abbildungsausrüstung (84) positioniert ist, um die Bilder auf einer Verlegerampe oder einer Firing Line eines Installationsschiffs (10), während die Rohrleitung (14) auf eine Spule des Schiffs (10) voranbewegt wird, wenn die Rohrleitung (14) auf die Spule gewickelt wurde, während die Rohrleitung (14) von der Spule abgewickelt wird und/oder an einem Ort (16) auf dem Meeresboden während des Verlegens der Rohrleitung (14) zu erfassen.

27. System nach Anspruch 25 oder Anspruch 26, das ferner Folgendes umfasst: ein Vermessungssystem (88) zum Bestimmen der Position eines Installationsschiffs (10); eine Bewegungsbezugseinheit (90) zum Überwachen von Bewegungen des Schiffs (10); und ein Verlegungsüberwachungssystem (92) zum Überwachen von Verlegeausrüstung des Schiffs (10).

28. System nach einem der Ansprüche 25 bis 27, umfassend einen Takteingang zum Zeitstempeln aufgezeichneter Bilder des Musters.

29. System nach Anspruch 28, wenn abhängig von Anspruch 27, wobei der Takteingang außerdem dazu eingerichtet ist, Daten von dem Vermessungssystem (88), der Bewegungsbezugseinheit (90) und/oder dem Verlegungsüberwachungssystem (92) zu zeitstempeln.

30. System nach einem der Ansprüche 25 bis 29, ferner umfassend eine Unterseerohrleitung (14), die ein Rohrendemuster aufweist, das eine mittige Markierung (74) umfasst, die zwischen mindestens zwei von der mittigen Markierung (74) winkelmäßig beabstandeten Hilfsmarkierungen (76) angeordnet ist, wobei sich die Markierungen des Musters jeweils von jeder anderen Markierung des Musters unterscheiden.

31. System nach Anspruch 30, wobei mindestens eine der Markierungen eine durchgehende Linie ist und mindestens eine andere der Markierungen eine unterbrochene Linie ist.

32. System nach Anspruch 30 oder Anspruch 31, wobei sich die Markierungen des Musters (74, 76) in Längsrichtung erstrecken und parallel zueinander sind.

33. System nach einem der Ansprüche 30 bis 32, wobei zwischen den Mustern (74, 76) aneinander angrenzender Rohrenden eine Feldmuffenbeschichtung (82) angeordnet ist.

34. System nach einem der Ansprüche 30 bis 33, wobei die Muster (74, 76) aneinander angrenzender Rohrenden winkelmäßig gleich orientiert sind.

## Revendications

1. Procédé de surveillance de défauts au niveau de soudures de canalisations, le procédé comprenant :
marquer une extrémité de conduite avec un motif (74, 76) ;
le procédé comprenant, en outre, les étapes suivantes, mises en œuvre par ordinateur :
enregistrer, dans une base de données d'informations de soudure (56), des informations de soudure associées à une soudure (72) réalisée au niveau de l'extrémité de conduite durant la fabrication d'une canalisation (14), les informations de soudure comprenant des données de défauts de soudure ;
enregistrer des images du motif (74, 76) dans la base de données d'informations de soudure (56) tandis que la canalisation est acheminée longitudinalement lors d'opérations de post-fabrication ; et
à partir des images enregistrées, déterminer une ou plusieurs caractéristiques spatiales de la canalisation (14) au niveau de la soudure,
les caractéristiques spatiales comprenant une orientation angulaire de la canalisation (14) autour d'un axe longitudinal de la canalisation (14), et
l'étape de détermination d'une ou de plusieurs caractéristiques spatiales de la canalisation (14) comprenant la détermination de l'orientation angulaire de la canalisation (14) en mesurant l'orientation angulaire du motif (74, 76).

2. Procédé selon la revendication 1, comprenant l'horodatage d'au moins deux images enregistrées du motif (74, 76).

3. Procédé selon la revendication 2, comprenant la comparaison des images du motif (74, 76) enregistrées à des moments différents.

4. Procédé selon l'une quelconque des revendications précédentes, dans lequel les informations de soudure comprennent un identifiant de soudure unique.

5. Procédé selon l'une quelconque des revendications précédentes, comprenant le mesurage du décalage angulaire du motif (74, 76) relativement à un plan vertical s'étendant longitudinalement le long de la canalisation (14).

6. Procédé selon l'une quelconque des revendications précédentes, dans lequel les caractéristiques spatiales comprennent une position longitudinale de la soudure (72) le long de la canalisation (14).

7. Procédé selon la revendication 6, comprenant la détermination de la position longitudinale de la soudure (72) par comptage des motifs (74, 76) passant par un point d'observation tandis que la canalisation (14) est acheminée longitudinalement.

8. Procédé selon l'une quelconque des revendications précédentes, dans lequel les opérations de post-fabrication comprennent le chargement de la canalisation (14) sur un tambour et/ou l'installation de la canalisation à un emplacement du fond marin (16).

9. Procédé selon la revendication 8, comprenant l'enregistrement d'images du motif (74, 76) à une ou plusieurs des occasions suivantes durant ou après le chargement : tandis que la canalisation (14) est acheminée le long d'une rampe de pose d'un navire d'installation (10) ; tandis que la canalisation (14) est acheminée et placée sur un tambour du navire (10) ; et une fois que la canalisation (14) a été enroulée sur le tambour.

10. Procédé selon la revendication 8 ou la revendication 9, comprenant l'enregistrement d'images du motif (74, 76) à une ou plusieurs des occasions suivantes durant l'installation : tandis que la canalisation (14) est déroulée d'un tambour du navire d'installation (10) ; tandis que la canalisation (14) est acheminée à travers un équipement de pose sur une rampe de pose du navire (10) ; et tandis que la canalisation (14) est acheminée le long d'un poste de préparation d'un navire d'installation (14).

11. Procédé selon l'une quelconque des revendications 8 à 10, comprenant l'enregistrement d'images du motif (74, 76) à l'emplacement du fond marin (16) lors de la pose de la canalisation (14).

12. Procédé selon l'une quelconque des revendications 8 à 11, comprenant, en outre, lors de l'enregistrement d'images du motif (74, 76), l'enregistrement : d'un mouvement d'un navire d'installation (10) ; d'une position du navire d'installation (10) ; de paramètres de l'équipement de pose du navire (10) ; et/ou d'une position du motif (74, 76).

13. Procédé selon la revendication 12, comprenant l'horodatage du mouvement ou de la position enregistré(e) du navire d'installation (10) ; des paramètres enregistrés de l'équipement de pose du navire (10) ; et/ou de la position enregistrée du motif (74, 76).

14. Procédé selon l'une quelconque des revendications précédentes, comprenant en outre : l'enregistrement d'images du motif (74, 76) à l'emplacement du fond marin (16) après la pose de la canalisation (14) ; et, à partir des images enregistrées, la détermination d'au moins une caractéristique spatiale de la canalisation (14) au niveau de la soudure (72).

15. Procédé selon l'une quelconque des revendications précédentes, comprenant, en outre, l'enregistrement d'informations d'extrémité de conduite et l'association de ces informations à la soudure (72).

16. Procédé selon la revendication 15, dans lequel les informations d'extrémité de conduite comprennent des informations concernant un matériau de la conduite et/ou une géométrie de la conduite.

17. Procédé selon l'une quelconque des revendications précédentes, comprenant l'utilisation des informations de soudure et des caractéristiques spatiales pour créer ou entretenir un jumeau numérique (106) de la canalisation (14).

18. Procédé selon la revendication 17 lorsqu'elle dépend de la revendication 12 ou la revendication 13, comprenant, en outre, la création ou l'entretien du jumeau numérique (106) en relation avec le mouvement ou la position enregistré(e) du navire d'installation (10) ; les paramètres enregistrés de l'équipement de pose du navire (10) ; et/ou la position enregistrée du motif (74, 76).

19. Procédé selon la revendication 17 ou la revendication 18, comprenant l'utilisation du jumeau numérique (106) pour évaluer la longévité à la fatigue de la canalisation (14) installée.

20. Procédé selon l'une quelconque des revendications précédentes, dans lequel le motif (74, 76) comprend une marque centrale (74) disposée entre au moins deux marques auxiliaires (76) angulairement espacées de la marque centrale (74).

21. Procédé selon la revendication 20, dans lequel la marque centrale (74) est réalisée à un emplacement central supérieur de la canalisation (14).

22. Procédé selon la revendication 20 ou la revendication 21, dans lequel chaque marque du motif est visuellement distincte de chaque autre marque du motif.

23. Procédé selon l'une quelconque des revendications précédentes, comprenant l'application d'un revêtement de raccord (82) entre les motifs (74, 76) d'extrémités de conduites mutuellement adjacentes.

24. Procédé selon l'une quelconque des revendications précédentes, comprenant la détection d'intervalles longitudinaux entre les motifs (74, 76) d'extrémités de conduites mutuellement adjacentes afin de déterminer les emplacements des soudures le long de la canalisation (14).

25. Système de surveillance de défauts au niveau de soudures de canalisations, le système comprenant :
une base de données d'informations de soudure (56) pour l'enregistrement d'informations de soudure associées à une soudure (72) réalisée au niveau d'une extrémité de conduite durant la fabrication d'une canalisation (14), les informations de soudure comprenant des données de défauts de soudure ; et
un équipement imageur (84) pour l'enregistrement, dans la base de données d'informations de soudure (56), d'images d'un motif (74, 76) avec lequel l'extrémité de conduite a été marquée ;
le système comprenant, en outre, des moyens pour déterminer, à partir des images enregistrées, une ou plusieurs caractéristiques spatiales de la canalisation (14) au niveau de la soudure (72), comprenant une orientation angulaire de la canalisation (14) autour d'un axe longitudinal de la canalisation (14), l'orientation angulaire étant déterminée en mesurant l'orientation angulaire du motif (74, 76) ;
l'équipement imageur (84) étant positionné pour acquérir les images tandis que la canalisation (14) est acheminée longitudinalement lors d'opérations de post-fabrication.

26. Système selon la revendication 25, dans lequel l'équipement imageur (84) est positionné pour acquérir les images sur une rampe de pose ou au niveau d'un poste de préparation d'un navire d'installation (10), tandis que la canalisation (14) est acheminée et placée sur un tambour du navire (10), une fois que la canalisation (14) a été enroulée sur le tambour, tandis que la canalisation (14) est déroulée du tambour, et/ou à un emplacement du fond marin (16) lors de la pose de la canalisation (14).

27. Système selon la revendication 25 ou la revendication 26, comprenant en outre :
un système de relevé (88) pour déterminer la position d'un navire d'installation (10) ;
une unité de référence de mouvement (MRU) (90) pour surveiller les mouvements du navire (10) ; et un système de surveillance de pose (92) pour surveiller l'équipement de pose du navire (10).

28. Système selon l'une quelconque des revendications 25 à 27, comprenant une entrée d'horloge pour l'horodatage des images enregistrées du motif.

29. Système selon la revendication 28 lorsqu'elle dépend de la revendication 27, dans lequel l'entrée d'horloge est également conçue pour l'horodatage de données provenant du système de relevé (88), de l'unité de référence de mouvement (90) et/ou du système de surveillance de pose (92).

30. Système selon l'une quelconque des revendications 25 à 29, comprenant, en outre, une canalisation sous-marine (14) comportant un motif d'extrémité de conduite comprenant une marque centrale (74) disposée entre au moins deux marques auxiliaires (76) angulairement espacées de la marque centrale (74), chaque marque du motif différant de chaque autre marque du motif.

31. Système selon la revendication 30, dans lequel au moins une des marques est une ligne continue et au moins une autre des marques est une ligne interrompue.

32. Système selon la revendication 30 ou la revendication 31, dans lequel les marques du motif (74, 76) s'étendent longitudinalement et sont parallèles les unes aux autres.

33. Système selon l'une quelconque des revendications 30 à 32, dans lequel un revêtement de raccord (82) est disposé entre les motifs (74, 76) d'extrémités de conduites mutuellement adjacentes.

34. Système selon l'une quelconque des revendications 30 à 33, dans lequel les motifs (74, 76) d'extrémités de conduites mutuellement adjacentes sont en alignement angulaire mutuel.
